(19) **Europäisches Patentamt / European Patent Office / Office européen des brevets**

(11) **EP 4 583 347 A1**

(12) **EUROPEAN PATENT APPLICATION**
published in accordance with Art. 153(4) EPC

(43) Date of publication:
**09.07.2025 Bulletin 2025/28**

(21) Application number: **23922477.7**

(22) Date of filing: **11.12.2023**

(51) International Patent Classification (IPC):
**H02J 3/32** (2006.01)       **H02J 3/38** (2006.01)

(52) Cooperative Patent Classification (CPC):
**H02J 3/32; H02J 3/38; H02J 7/00; H02J 7/35;**
**Y02E 70/30**

(86) International application number:
**PCT/CN2023/137873**

(87) International publication number:
**WO 2024/169361 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.02.2023   CN 202310108608**

(71) Applicant: **SHENZHEN POWEROAK NEWENER**
**CO., LTD**
**Shenzhen, Guangdong 518000 (CN)**

(72) Inventors:
• **MA, Hui**
  **Shenzhen, Guangdong 518000 (CN)**
• **GUO, Zhihua**
  **Shenzhen, Guangdong 518000 (CN)**
• **CANG, Wentao**
  **Shenzhen, Guangdong 518000 (CN)**
• **MENG, Xiaoqun**
  **Shenzhen, Guangdong 518000 (CN)**
• **SU, Yan**
  **Shenzhen, Guangdong 518000 (CN)**

(74) Representative: **Ipside**
  **7-9 Allée Haussmann**
  **33300 Bordeaux Cedex (FR)**

(54) **ENERGY STORAGE SYSTEM HAVING MULTIPLE DEVICES CONNECTED IN PARALLEL AND CHARGING AND DISCHARGING CONTROL METHOD THEREOF**

(57)    The present application relates to the technical field of energy storage power supplies, and in particular, relates to a multi-machine parallel energy storage system and a charging and discharging control method thereof. The multi-machine parallel energy storage system comprises: a single-channel renewable energy device, at least two energy storage devices, an AC bus and a load. When the renewable energy device is connected to any one of the at least two energy storage devices, the master device and the slave device are determined, and the master device is configured to: dynamically acquire first data, second data and third data; determine the current state of the multi-machine parallel energy storage system according to the first data, the second data and the third data; control the renewable energy device to provide electric energy to the master device when the current state meets the charging condition; and control the renewable energy device to provide electric energy to the slave device when the master device reaches a fully charged state. According to the present application, when a plurality of energy storage devices are connected in parallel, the function of automatically charging the plurality of energy storage devices can be realized simply by connecting one set/single-channel renewable energy devices.

EP 4 583 347 A1

Dynamically acquiring a first data of the master device, a second data of the slave device, and a third data of the renewable energy device — S1

Determining the current state of the multi-machine parallel energy storage system according to the first data, the second data and the third data — S2

Calculating the total load power according to the first data and the second data — S21

Whether the third data (power-generation power) is greater than the total load power — S22

Yes

No

Determining that the current state does not meet the charging condition — S24

Determining that the current state meets the charging condition — S23

Controlling the renewable energy device to provide electric energy to the load, and at the same time, the master device and the slave device are connected in parallel to discharge so as to supply power to the load — S5

Controlling the renewable energy device to provide electric energy to the master device when the current state meets the charging condition — S3

Controlling the renewable energy device to provide electric energy to the slave device through the master device when the master device reaches a fully charged state — S4

FIG. 6

**Description**

**Cross-Reference to Related Application**

The present application claims priority to and benefit of Chinese Patent Application No. 202310108608.5, filed with the Chinese Patent Office on February 14, 2023 and entitled "A MULTI-MACHINE PARALLEL ENERGY STORAGE SYSTEM AND A CHARGING AND DISCHARGING CONTROL METHOD THEREOF", the entirety of which is incorporated herein by reference.

**Technical Field**

The present application relates to the technical field of energy storage power supplies, and in particular, relates to a multi-machine parallel energy storage system and a charging and discharging control method thereof.

**Background of the Invention**

With the development of the photovoltaic (PV) industry and the craze for outdoor travel, industries related to photovoltaic energy storage are also developing rapidly, and the application scenarios of photovoltaic energy storage products are increasing. In the face of the ever-increasing load power demands, usually multiple energy storage devices are connected in parallel to output electric power for high-power loads.

The AC sides of independent energy storage devices are connected together and the AC sides thereof can only realize the control of output and load driving. Since the battery sides and DC charging sides of the independent energy storage devices are independent, each of the energy storage devices needs to be connected to a photovoltaic (solar) cell panel separately in order to be charged through solar energy. However, users often only have one set of solar photovoltaic panels, which requires users to manually connect the photovoltaic cell panels to individual energy storage devices one by one for charging. Not only is the work tedious, but the repeated connection of the photovoltaic cell panels to the respective energy storage devices also poses a safety hazard.

**Summary of the Invention**

The present application provides a multi-machine parallel energy storage system and a charging and discharging control method thereof so as to solve the problem of tedious work and potential safety hazards caused by users connecting the renewable energy device to the respective energy storage devices one by one for charging when multiple energy storage devices are connected in parallel.

In order to solve the above technical problems, a technical solution adopted by the embodiments of the present application is to provide a multi-machine parallel energy storage system which includes: a single renewable energy device, at least two energy storage devices, an AC bus and a load, wherein the renewable energy device is configured to be connected to one of the at least two energy storage devices, and AC output terminals of the at least two energy storage devices are connected to the load through the AC bus;

when the renewable energy device is connected to any one of the at least two energy storage devices, the energy storage device connected to the renewable energy device is determined as a master device, and the energy storage device not connected to the renewable energy device is determined as a slave device, the master device is configured to:

dynamically acquire first data of the master device, second data of the slave device, and third data of the renewable energy device;
determine the current state of the multi-machine parallel energy storage system according to the first data, the second data and the third data;
control the renewable energy device to provide electric energy to the master device when the current state meets the charging condition; and control the renewable energy device to provide electric energy to the slave device when the master device reaches a fully charged state.

Preferably, the operation of determining the current state of the multi-machine parallel energy storage system according to the first data, the second data and the third data includes: calculating a total load power of the multi-machine parallel energy storage system according to the first data and the second data; determining whether the third data is greater than the total load power, the third data including the power-generation power of the renewable energy device; when the third data is greater than the total load power, determining that the current state meets the charging condition; and when the third data is less than or equal to the total load power, determining that the current state does not meet the charging condition.

Further preferably, the system further comprises: after determining that the current state does not meet the charging condition, controlling the renewable energy device to provide electric energy to the load, and at the same time, the master device and the slave device are connected in parallel to discharge so as to supply power to the load.

Preferably, the system adopts a dual-loop control mode of an AC output voltage outer loop and an inverter current inner loop.

Further preferably, the master device introduces photovoltaic power-generation power and battery discharge power into the AC output voltage outer loop of the dual-loop control mode as feedforward control, and the AC output target voltage of the master device is expressed as the following equation:

$$\text{VAC}_{Ref\_M1} = \text{VAC}_{rated} + \frac{P_{PV}}{P_{rated}} \times (1 + \Delta\text{U})$$

$$\Delta\text{U} = -\frac{P_{discharge}}{P_{rated}} \times Ki$$

wherein $\text{VAC}_{Ref\_M1}$ is the AC output voltage target value of the master device; $\text{VAC}_{rated}$ is the AC rated output voltage of the system; $P_{PV}$ is the current power-generation power of the renewable energy device; $P_{rated}$ is the rated power of the system; $\Delta\text{U}$ is the adjustment amount of the AC output voltage, which is related to the battery pack discharge power of the master device; $P_{discharge}$ is the battery pack discharge power of the master device, Ki is the output voltage adjustment coefficient corresponding to the battery pack discharge power of the master device, which is adjusted according to the dynamic response demand occasion of the actual load; and $0<Ki\leq1$, wherein the larger the Ki is, the faster the response to the sudden change of load will be, and the shorter the time to adjust the output voltage will be; and the smaller the Ki is, the longer the time to adjust the output voltage will be, and the smoother the adjustment process will be.

Further preferably, the slave device adopts a constant voltage control mode in the AC output voltage outer loop of the dual-loop control mode, and the AC output target voltage of the slave device is expressed as the following equation:

$$\text{VAC}_{Ref\_M2} = \text{VAC}_{rated}$$

wherein $\text{VAC}_{Ref\_M2}$ is the AC output voltage target value of the slave device; and $\text{VAC}_{rated}$ is the AC rated output voltage of the system.

Further preferably, in a case where the number of the energy storage devices is at least three, the slave devices comprises at least two devices and the master device is further configured to: when the master device reaches the fully charged state, determine the charging sequence of the slave devices according to a predetermined rule and control the renewable energy device to provide electric energy to the slave devices through the master device according to the charging sequence.

To solve the above technical problems, another technical solution adopted by the embodiments of the present application is to provide a charging and discharging control method for a multi-machine parallel energy storage system, which is applied to the multi-machine parallel energy storage system. The multi-machine parallel energy storage system includes: a renewable energy device, at least two energy storage devices, an AC bus, and a load, wherein the renewable energy device is connected to the energy storage devices, and AC output terminals of the at least two energy storage devices are connected to the load via the AC bus; when the renewable energy device is connected to any one of the at least two energy storage devices, the energy storage device connected to the renewable energy device is determined as a master device, and the energy storage device not connected to the renewable energy device is determined as a slave device, and the charging and discharging control method for the system includes: dynamically acquiring first data of the master device, second data of the slave device, and third data of the renewable energy device; determining the current state of the multi-machine parallel energy storage system according to the first data, the second data and the third data; controlling the renewable energy device to provide electric energy to the master device when the current state meets the charging condition; and controlling the renewable energy device to provide electric energy to the slave device when the master device reaches a fully charged state.

Preferably, the charging and discharging control method for the system includes: enabling the system to adopt a dual-loop control mode of an output voltage outer loop and an inverter current inner loop; the master device introduces photovoltaic power-generation power and battery discharge power into the AC output voltage outer loop of the dual-loop control mode as feedforward control, and the AC output target voltage of the master device is expressed as the following equation:

$$VAC_{Ref\_M1} = VAC_{rated} + \frac{P_{PV}}{P_{rated}} \times (1 + \Delta U)$$

$$\Delta U = -\frac{P_{discharge}}{P_{rated}} \times Ki$$

wherein $VAC_{Ref\_M1}$ is the AC output voltage target value of the master device; $VAC_{rated}$ is the AC rated output voltage of the system; $P_{PV}$ is the current power-generation power of the renewable energy device; $P_{rated}$ is the rated power of the system; $\Delta V$ is the adjustment amount of the output voltage, which is related to the battery pack discharge power; $P_{discharge}$ is the battery pack discharge power of the master device, Ki is the output voltage adjustment coefficient corresponding to the battery pack discharge power of the master device, which is adjusted according to the dynamic response demand occasion of the actual load; and 0<Ki≤1, wherein the larger the Ki is, the faster the response to the sudden change of load will be, and the shorter the time to adjust the output voltage will be; and the smaller the Ki is, the longer the time to adjust the output voltage will be, and the smoother the adjustment process will be.

The slave device adopts a constant voltage control mode in the AC output voltage outer loop of the dual-loop control mode, and the AC output target voltage of the slave device is expressed as the following equation:

$$VAC_{Ref\_M2} = VAC_{rated}$$

wherein $VAC_{Ref\_M2}$ is the AC output voltage target value of the slave device; and $VAC_{rated}$ is the AC rated output voltage of the system.

The present application further provides an electronic device, which includes: at least one processor, and a storage in communication connection with the at least one processor; wherein the storage stores instructions that can be executed by the at least one processor, and the instructions are executed by the at least one processor to enable the at least one processor to execute the charging and discharging control method for the multi-machine parallel energy storage system as described above.

The present application further provides a non-volatile computer storage medium in which computer executable instructions are stored, and the computer executable instructions, when executed by one or more processors, may enable the one or more processors to execute the charging and discharging control method for the multi-machine parallel energy storage system as described above.

Different from the prior art in which only AC parallel discharge can be achieved when multiple energy storage devices are connected in parallel, the present application achieves AC bus charging through steps of: determining the current state of the multi-machine parallel energy storage system according to the first data, the second data and the third data when the AC sides of multiple energy storage devices are connected in parallel; and when the current state meets the charging condition, charging the energy storage system on the principle of first the master device and then the slave device, while keeping the connection relationship between the renewable energy device and a current energy storage device in the system unchanged. Thus, the function of automatically charging the multiple energy storage devices can be realized simply by connecting one set/single-channel renewable energy devices.

## Brief Description of the Drawings

One or more embodiments are illustrated by corresponding attached drawings, and this does not constitute limitation on the embodiments. Elements with the same reference numerals in the attached drawings are indicated as similar elements, and the pictures in the attached drawings do not constitute scale limitation unless otherwise stated particularly.

FIG. 1 is a schematic structural diagram of a multi-machine parallel energy storage system according to an embodiment of the present application.
FIG. 2 is a block diagram of a working mode of a multi-machine parallel energy storage system according to an embodiment of the present application.
FIG. 3 is a block diagram of the AC output control of a master device in the non-discharging state of a multi-machine parallel energy storage system according to an embodiment of the present application.
FIG. 4 is a block diagram of the AC output control of the master device in the discharging state of the multi-machine parallel energy storage system according to an embodiment of the present application.
FIG. 5 is a block diagram of charging control for a slave device of a multi-machine parallel energy storage system according to an embodiment of the present application.

FIG. 6 is a schematic flowchart diagram of charging and discharging control of a multi-machine parallel energy storage system according to an embodiment of the present application.

FIG. 7 is a schematic structural diagram of an electronic device according to an embodiment of the present application.

## Detailed Description of the Embodiments

In order to make objectives, technical solutions and advantages of the present application clearer, the present application will be further described in detail hereinafter with reference to attached drawings and embodiments. It shall be appreciated that, the specific embodiments described herein are only used to explain the present application, and are not intended to limit the present application.

It shall be noted that, various features in the embodiments of the present application may be combined with each other without conflict, and all the combinations are within the scope claimed in the present application. In addition, although functional module division is made in the schematic diagrams of the device and logical sequences are shown in the flowchart diagrams, in some cases, the steps shown or described may be executed with module division and sequences different from those in the schematic diagrams of the device and the flowchart diagrams.

Unless otherwise defined, all technical and scientific terms used in this specification have the same meanings as commonly understood by those skilled in the art of the present application. The terms used in the specification of the present application are only for the purpose of describing specific embodiments, and are not intended to limit the present application. The term "and/or" used in this specification includes any and all combinations of one or more associated items listed.

Energy storage devices refer to energy storage and conversion devices which are composed of energy conversion units (such as bidirectional converters), energy storage units (energy storage batteries), energy management units and safety systems or other important components. The energy storage batteries can be charged through photovoltaic/mains power, and the energy storage devices can supply power to loads (refrigerators, TVs, power tools, smart terminals, etc.) in the off-grid state. The energy storage devices themselves can work independently.

Renewable energy devices include photovoltaic/wind/hydroelectric power generation devices, such as photovoltaic cell panels, wind turbines or the like. The following description is made by taking the photovoltaic cell panel as an example.

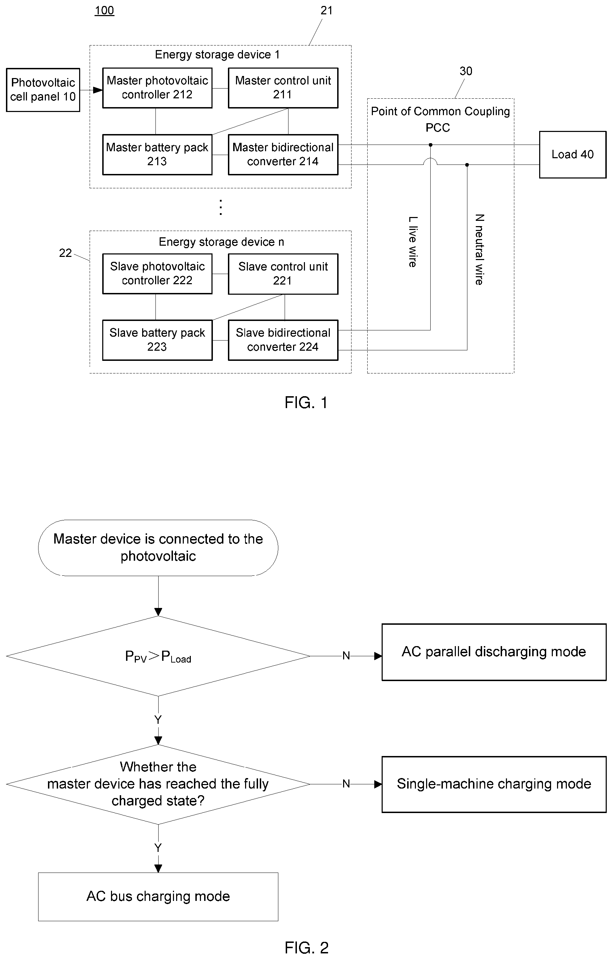

Reference is made to FIG. 1 for a multi-machine parallel energy storage system 100 provided according to an embodiment of the present application. The multi-machine parallel energy storage system 100 includes: a photovoltaic cell panel 10, at least two energy storage devices (which exemplarily include energy storage devices 1 to n in FIG. 1, where n≥2), an AC bus 30 and a load 40. The photovoltaic cell panel 10 is used to be connected to one of the energy storage devices (the energy storage device 1 is exemplarily selected to be connected to the photovoltaic cell panel 10 in FIG. 1), and the at least two energy storage devices are connected to the load 40 through the AC bus 30. The AC bus 30 includes a power line, and the power line includes a live wire and a neutral wire for power connection between respective energy storage devices. Data is exchanged between the energy storage devices through wired or wireless communication (not shown in the figure), such as through the Controller Area Network (CAN), WIFI (the wireless network communication technology), Bluetooth, serial interface and other communication modes.

When the photovoltaic cell panel 10 is connected to any of the at least two energy storage devices, the energy storage device connected to the photovoltaic cell panel 10 is determined as the master device 21, and the energy storage device not connected to the photovoltaic cell panel 10 is determined as the slave device 22. Specifically, when the photovoltaic cell panel 10 is connected to the energy storage device 1, it is detected by the energy storage device 1 that the PV voltage signal of the PV port meets the first voltage range (for example, 50V to 200V, 10V to 150V, etc., and the first voltage range may be determined according to actual conditions), then the energy storage device 1 is automatically determined as the master device 21 and it communicates with other energy storage devices at the same time so that the energy storage devices 2 to n are determined as the slave devices 22.

The energy storage devices have the same structures and functions no matter they serve as the master device or the slave devices. Specifically, each of the energy storage devices includes: a photovoltaic controller, a battery pack, a control unit and a bidirectional converter, and the control unit is connected to the photovoltaic controller, the battery pack and the bidirectional converter respectively. The photovoltaic controller is one of the core components of the photovoltaic power generation system, and it is mainly used to detect the connection of photovoltaic cell panels and realize the charging of the current energy storage device by solar energy through the MPPT maximum power tracking algorithm. The photovoltaic controller also has the following functions: 1) preventing overcharging or over-discharging of the battery pack and extending the life of the battery pack; 2) preventing the reverse polarity connection of the photovoltaic cell panel array and the storage battery; 3) providing breakdown protection caused by lightning stroke. The battery pack is used to store or release electric energy. The control unit is used for control of respective units/modules in the energy storage device and communication with other energy storage devices; the control unit includes one or more processors, storages and one or more programs therein; and the control unit for each energy storage device is the same, except that the program and/or function called by each energy storage device vary depending on whether the energy storage device serves as the master device or the slave device. The bidirectional converter is used for conversion including DC to AC and AC to DC.

Specifically, as shown in FIG. 1, the master device 21 includes a master control unit 211, a master photovoltaic controller 212, a master battery pack 213 and a master bidirectional converter 214. The slave device 22 includes a slave control unit 221, a slave photovoltaic controller 222, a slave battery pack 223 and a slave bidirectional converter 224.

The input end of the master photovoltaic controller 212 is connected to the photovoltaic cell panel 10, the output end of the master photovoltaic controller 212 is connected to the first end of the master battery pack 213, the second end of the master battery pack 213 is connected to the first end of the master bidirectional converter 214, the second end of the master bidirectional converter 214 is connected to the load 40 through the AC bus 30, and the master control unit 211 is respectively connected to the master photovoltaic controller 212, the master battery pack 213 and the master bidirectional converter 214. The master control unit 211 is used for data transmission with the slave control unit 221 and control the working state of the master photovoltaic controller 212, the master battery pack 213 and the master bidirectional converter 214.

The first end of the slave bidirectional converter 224 is connected to the second end of the slave battery pack 223, the second end of the slave bidirectional converter 224 is connected to the load 40 through the AC bus 30, and the first end of the slave battery pack 223 is connected to the slave photovoltaic controller 222. The slave control unit 221 is connected to the slave photovoltaic controller 222, the slave battery pack 223 and the slave bidirectional converter 224 respectively; the slave control unit 221 is used for data transmission with the master control unit 211 and control the working states of the slave photovoltaic controller 222, the slave battery pack 223 and the slave bidirectional converter 224.

The master control unit 211 in the master device is used to first dynamically acquire the first data of the master device, the second data of the slave device 22, and the third data of the photovoltaic cell panel 10. Then, the current state of the multi-machine parallel energy storage system 100 is determined according to the first data, the second data, and the third data. Next, when the current state meets the charging conditions, the photovoltaic cell panel 10 is controlled to provide electric energy to the master device 21. When the master device 21 reaches a fully charged state, the photovoltaic cell panel 10 is controlled to provide electric energy to the slave device 22 through the master device 21. That is, the photovoltaic cell panel 10 is controlled to provide electric energy to the master device 21, and at the same time, the master device 21 is controlled to provide electric energy to the slave device 22.

In some embodiments, the first data of the master device 21 includes the battery capacity and load power or the like of the master device 21, the second data of the slave device 22 includes the battery capacity and load power or the like of the slave device 22, and the third data of the photovoltaic cell panel 10 includes the power-generation power $P_{pv}$.

The total load power $P_{Load}$ of the master device and the slave device is calculated according to the first data and the second data. Then, the working mode of the multi-machine parallel energy storage system 100 is determined according to the total load power $P_{Load}$, the power-generation power $P_{pv}$ of the third data and the battery capacity SOC of the master device.

Referring to FIG. 2, there is shown a block diagram of a working mode of a multi-machine parallel energy storage system provided according to an embodiment of the present application. After the photovoltaic cell panel 10 is connected to the master device 21, the master device 21 dynamically acquires the first data of the master device 21, the second data of the slave device 22 and the third data of the photovoltaic cell panel 10, and then calculates to obtain the total load power $P_{Load}$ and the power-generation power $P_{pv}$. It is determined whether $P_{pv} > P_{Load}$; if not, then it is determined that the current state does not meet the charging condition, and thus the system enters the AC parallel discharge mode, that is, the photovoltaic cell panel 10 is controlled to provide electric energy to the load while the master device 21 and the slave device 22 are discharged together to provide electric energy for use by the load; and if yes, then it is determined that the current state meets the charging conditions, and it is further determined whether the master device 21 reaches the fully charged state. If the master device does not reach the fully charged state, then it enters a single-machine charging mode, that is, the photovoltaic cell panel 10 is controlled to provide electric energy to the master device 21. If the master device reaches the fully charged state, then it enters an AC bus charging mode, that is, the photovoltaic cell panel 10 is controlled to provide electric energy to the master device 21, and at the same time, the master device 21 is controlled to provide electric energy to the slave device 22.

In the AC parallel discharge mode, the total output power of the multi-machine parallel energy storage system 100 is the total load power $P_{Load}$ minus the current PV power-generation power $P_{Pv}$, that is, $P_{Load} - P_{Pv}$.

The essence for the single-machine charging mode and the AC bus charging mode after the current state meets the charging condition as described above is to charge the energy storage devices on the principle of first the master device and then the slave device. The basis for determining whether the master device has reached the fully charged state is to determine whether the battery capacity of the master device exceeds the set threshold. For example, when the battery capacity of the master device 21 exceeds 80% or 100%, it is considered that the master device 21 has reached the fully charged state, and otherwise, it is considered that the master device 21 has not reached the fully charged state. After the master device reaches the fully charged state, the photovoltaic cell panel 10 is controlled to charge the slave device 22 through the master device 21. The power at which the photovoltaic cell panel 10 charges the master device or the slave device is equal to the power-generation power $P_{PV}$ of the photovoltaic cell panel 10 minus the total load power $P_{Load}$, that is, $P_{PV} - P_{Load}$.

When the system has at least three energy storage devices, that is, the system has multiple slave devices, the respective slave devices are charged in sequence according to the predetermined rules. The predetermined rules may be based on the ascending order of the electricity quantity of the slave devices, or the descending order of the electricity quantity of the slave devices, or the sequence of the address sizes of the slave devices or the like.

During the operation of the above-mentioned multi-machine parallel energy storage system 100, the master device monitors the working status of all the energy storage devices and the photovoltaic cell panel 10. When the connection status of the photovoltaic cell panel, the power of photovoltaic power generation and the load 40 vary, the operating status of the multi-machine parallel energy storage system 100 is adjusted in time to ensure the power supply requirements first.

The above multi-machine parallel energy storage system 100 adopts a dual-loop control mode of an AC output voltage outer loop and an inverter current inner loop. For the AC output voltage outer loop, the master device and the slave device are respectively as follows.

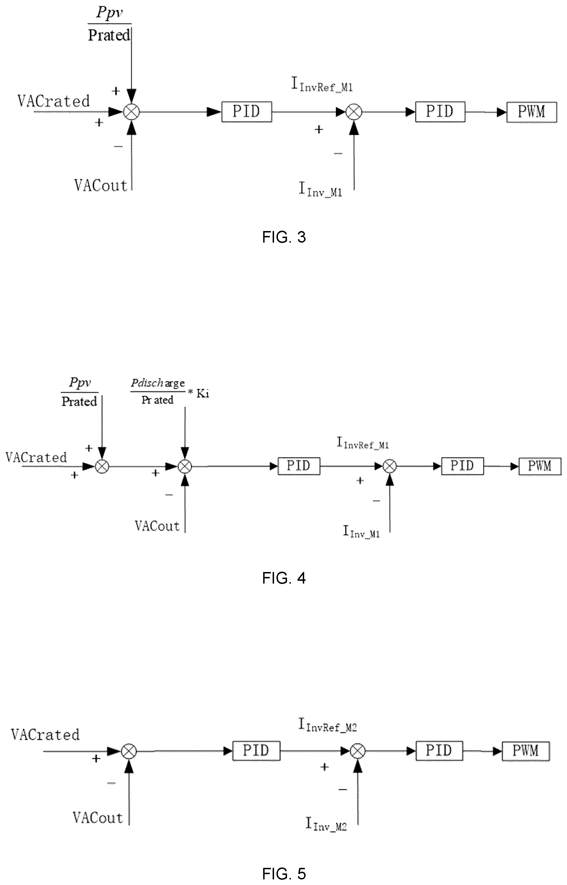

Referring to FIG. 3 and FIG. 4, FIG. 3 is a block diagram of the AC output control of a master device in the non-discharging state of a multi-machine parallel energy storage system provided according to an embodiment of the present application, and FIG. 4 is a block diagram of the AC output control of the master device in the discharging state of a multi-machine parallel energy storage system provided according to an embodiment of the present application. For the energy storage device 1 (i.e., the master device 21) connected to the photovoltaic cell panel 10 in the multi-machine parallel energy storage system, photovoltaic power-generation power and battery discharge power as feedforward control are introduced into the AC output voltage outer loop of the dual-loop control mode thereof to realize photovoltaic charging-AC parallel discharging power control.

After the master device 21 is connected to the photovoltaic cell panel 10, the maximum power tracking MPPT control is performed, and meanwhile, the AC output voltage of the master device 21 is adjusted according to the photovoltaic power, and the AC output target voltage of the master device is expressed as the following equation:

$$\text{VAC}_{Ref\_M1} = \text{VAC}_{rated} + \frac{P_{PV}}{P_{rated}} \times (1 + \Delta U) \quad \text{Equation (1)}$$

wherein $\text{VAC}_{Ref\_M1}$ is the AC output voltage target value of the master device; $\text{VAC}_{rated}$ is the AC rated output voltage of the system; $P_{PV}$ is the current power-generation power of the renewable energy device, $P_{rated}$ is the rated power of the system; $\Delta U$ is the adjustment amount of the AC output voltage, which is related to the battery pack discharge power of the master device.

$$\Delta U = -\frac{P_{discharge}}{P_{rated}} \times Ki \quad \text{Equation (2)}$$

wherein $P_{discharge}$ is the battery pack discharge power of the master device, $Ki$ is the output voltage adjustment coefficient corresponding to the battery pack discharge power of the master device, which is adjusted according to the dynamic response demand occasion of the actual load; and $0 < Ki \leq 1$, wherein the larger the $Ki$ is, the faster the response to the sudden change of load will be, and the shorter the time to adjust the output voltage will be; and the smaller the $Ki$ is, the longer the time to adjust the output voltage will be, and the smoother the adjustment process will be.

Referring to FIG. 3, the Equation (1) and the Equation (2), the current power-generation power $P_{pv}$ of the renewable energy device meets the current charging and load driving power requirements of the multi-machine parallel energy storage system, and the battery pack of the master device (i.e., the master battery pack 213) is in a non-discharging state. At this time, $P_{discharge} = 0$ W, then $\Delta U = 0$, and the AC output voltage of the master device gradually increases with the increase of the current power-generation power $P_{pv}$ of the renewable energy device. Referring to FIG. 4, the Equation (1) and the Equation (2), the current power-generation power $P_{pv}$ of the renewable energy device is lower than the current charging and load driving power requirements of the multi-machine parallel energy storage system, and the battery pack of the master device (i.e., the master battery pack 213) enters the discharging state. At this time, $P_{discharge} > 0$ W, and as can be known from Equation (2), $\Delta U < 0$ W, and the AC output voltage of the master device gradually decreases with the discharge power of the battery pack of the master device.

Referring to FIG. 5, there is shown a block diagram of charging control for a slave device of a multi-machine parallel energy storage system provided according to an embodiment of the present application. For the energy storage devices 2 to n (i.e., the slave devices 22) connected to the photovoltaic cell panel 10 in the multi-machine parallel energy storage system, a constant voltage control mode is adopted in the AC output voltage outer loop of the dual-loop control mode thereof to realize AC bus charging. The voltage outer loop target voltage of the slave device, i.e., the AC output target voltage of the slave device, is expressed as the following equation:

$$\mathrm{VAC}_{Ref\_M2} = \mathrm{VAC}_{rated} \qquad \text{Equation (3)}$$

wherein $\mathrm{VAC}_{Ref\_M2}$ is the AC output voltage target value of the slave device; and $\mathrm{VAC}_{rated}$ is the AC rated output voltage of the system.

Referring to FIG. 1, as can be known from the Equation (3) and FIG. 5, when the voltage of the point of common coupling (PCC) of the AC bus is > $\mathrm{VAC}_{rated}$, the slave device is charged through the AC bus, and the charging is achieved through the following path: photovoltaic cell panel--master device--AC parallel bus--slave device; and when the voltage of the point of common coupling (PCC) of the AC bus is < $\mathrm{VAC}_{rated}$, the battery pack of the slave device (i.e., the slave battery pack 223) is discharged to drive the load through the AC bus.

Referring to FIG. 3 and FIG. 4, the difference between the AC output target voltage of the master device obtained according to the Equation (1) and the Equation (2) and the AC bus actual voltage VAC *out* is calculated to obtain the voltage error value, which is then subjected to the processing of the proportional-integral regulator to obtain the reference current $I_{InvRef\_M1}$ of the inverter current inner loop of the master device, and then the difference between the reference current $I_{InvRef\_M1}$ and the actual inverter current $I_{Inv\_M1}$ is calculated to obtain the current error value, which is then subjected to the processing of the proportional-integral regulator to obtain the modulation wave to control the switch of the power electronic controllable element.

Referring to FIG. 5, the difference between the AC output target voltage of the slave device obtained according to the Equation (3), i.e., the AC rated output voltage of the system, and the AC bus actual voltage VAC *out* is calculated to obtain the voltage error value, which is then subjected to the processing of the proportional-integral regulator to obtain the reference current $I_{InvRef\_M2}$ of the inverter current inner loop of the slave device, and then the difference between the reference current $I_{InvRef\_M2}$ and the actual inverter current $I_{Inv\_M2}$ is calculated to obtain the current error value, which is then subjected to the processing of the proportional-integral regulator to obtain the modulation wave to control the switch of the power electronic controllable element.

The working steps of the overall multi-machine parallel energy storage system when the charging conditions are met are as follows.

1) When the master device 21 connected to the photovoltaic cell panel 10 has not reached the fully charged state, the system enters the single-machine charging mode for single-machine charging;

2) after the master device reaches the fully charged state, the system enters the AC bus charging mode; the master device performs photovoltaic-AC parallel discharge, controls the PV power to output to the AC bus, and the voltage of the point of common coupling (PCC) of the AC bus is increased;

3) the slave device initiates the AC constant voltage control, the constant voltage target is $\mathrm{VAC}_{Ref\_M2} = \mathrm{VAC}_{rated}$, the increase in the port voltage is detected, and the AC constant voltage controls the slave device to perform AC parallel charging.

The master device connected to the photovoltaic cell panel 10 adopts photovoltaic power feedforward control. When the photovoltaic output power increases/decreases, the discharge output voltage of the AC port of the master device increases/decreases, and the charging power of the slave device is increased/decreased through the AC bus.

The master device connected to the photovoltaic cell panel 10 also adopts the master battery pack discharge power feedforward control at the same time. The discharge of the master battery pack actively reduces the discharge output voltage of the AC port of the master device. The charging power of the master device is reduced through the AC bus, and under the condition of keeping the connection relationship between the renewable energy device and a current energy storage device in the system unchanged, the energy storage system is charged on the principle of first the master device and then the slave device.

As shall be appreciated, the above embodiments only take the photovoltaic power generation device-photovoltaic cell panel as an example, and other renewable energy devices such as wind/hydroelectric power generation devices are also possible.

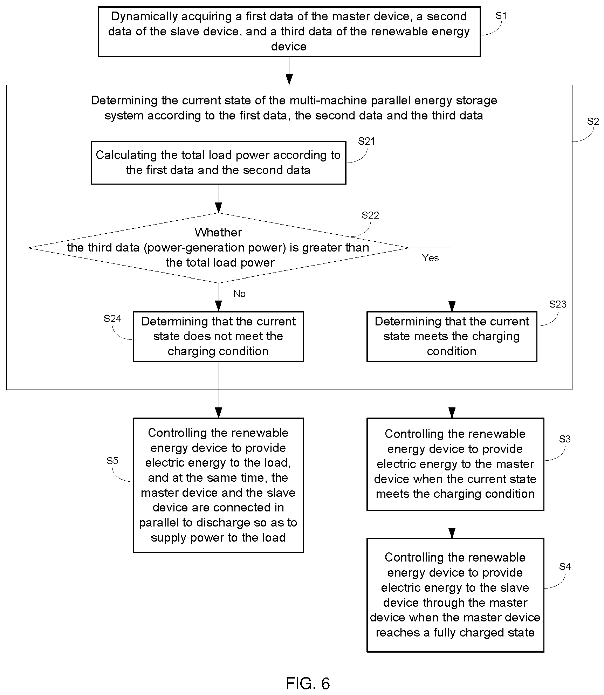

Referring to FIG. 6, there is shown a schematic flowchart diagram of a charging and discharging control method for a multi-machine parallel energy storage system provided according to an embodiment of the present application. The charging and discharging control method is applied to the multi-machine parallel energy storage system 100 as described above, and the method includes:

Step S1. dynamically acquiring first data of the master device, second data of the slave device, and third data of the renewable energy device;

Step S2. determining the current state of the multi-machine parallel energy storage system according to the first data, the second data and the third data;

Step S3. controlling the renewable energy device to provide electric energy to the master device 21 when the current state meets the charging condition;
Step S4. controlling the renewable energy device to provide electric energy to the slave device through the master device when the master device reaches a fully charged state.

The step S2 includes:

Step S21. calculating the total load power of the multi-machine parallel energy storage system according to the first data and the second data;
Step S22. determining whether the third data is greater than the total load power, wherein the third data includes the power-generation power of the renewable energy device;
Step S23. when the third data is greater than the total load power, determining that the current state meets the charging condition;
Step S24. when the third data is less than or equal to the total load power, determining that the current state does not meet the charging condition.

When it is determined that the current state does not meet the charging condition, the method further includes:
Step S5. controlling the renewable energy device to provide electric energy to the load, and at the same time, the master device and the slave device are connected in parallel to discharge so as to supply power to the load.

In the control method as described above, the system adopts a dual-loop control mode of an output voltage outer loop and an inverter current inner loop.

The master device introduces photovoltaic power-generation power and battery discharge power into the AC output voltage outer loop of the dual-loop control mode as feedforward control, and the AC output target voltage of the master device is expressed as the following equation:

$$\mathrm{VAC}_{Ref\_M1} = \mathrm{VAC}_{rated} + \frac{P_{PV}}{P_{rated}} \times (1 + \Delta U) \quad \text{Equation (1)}$$

$$\Delta \mathrm{U} = -\frac{P_{discharge}}{P_{rated}} \times Ki \quad \text{Equation (2)}$$

wherein $\mathrm{VAC}_{Ref\_M1}$ is the AC output voltage target value of the master device; $\mathrm{VAC}_{rated}$ is the AC rated output voltage of the system; $P_{PV}$ is the current power-generation power of the renewable energy device; $P_{rated}$ is the rated power of the system; $\Delta U$ is the adjustment amount of the output voltage, which is related to the battery pack discharge power of the master device; $P_{discharge}$ is the battery pack discharge power of the master device, Ki is the output voltage adjustment coefficient corresponding to the battery pack discharge power of the master device, which is adjusted according to the dynamic response demand occasion of the actual load, and $0 < Ki \leq 1$.

The slave device adopts a constant voltage control mode in the AC output voltage outer loop of the dual-loop control mode, and the AC output target voltage of the slave device is expressed as the following equation:

$$\mathrm{VAC}_{Ref\_M2} = \mathrm{VAC}_{rated}$$

wherein $\mathrm{VAC}_{Ref\_M2}$ is the AC output voltage target value of the slave device; and $\mathrm{VAC}_{rated}$ is the AC rated output voltage of the system.

For technical details not fully described in the charging and discharging control method for a multi-machine parallel energy storage system, reference may be made to the multi-machine parallel energy storage system provided in the above embodiments of the present application.

When multiple energy storage devices are connected in parallel, the multi-machine parallel energy storage system and the charging and discharging control method thereof provided in the embodiments of the present application can realize the function of automatically charging the multiple energy storage devices simply by connecting one set/single renewable energy devices.

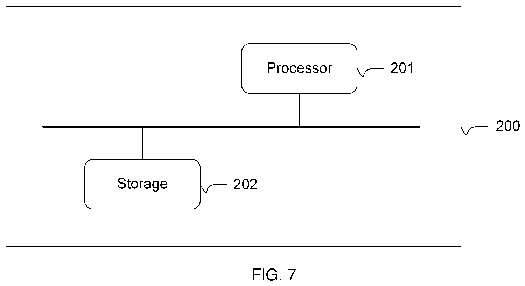

FIG. 7 is a schematic structural diagram of an electronic device 200 provided according to an embodiment of the present application. As shown in FIG. 7, the electronic device 200 includes: one or more processors 201 and a storage 202. One processor 201 is taken as an example in FIG. 7.

The processor 201 and the storage 202 may be connected via a bus or by other means, and FIG. 7 takes the connection via a bus as an example.

As a non-volatile computer readable storage medium, the storage 202 may be used to store non-volatile software programs, non-volatile computer executable programs and modules. The processor 201 runs the non-volatile software programs, instructions and units stored in the storage 202 to execute various functions and data processing of the electronic device 200, i.e., to implement a charging and discharging control method for the multi-machine parallel energy storage system of the above embodiments.

The storage 202 may include a program storing area and a data storing area, wherein the program storing area may store the operating system and the application program required by at least one function, and the data storing area may store data created according to the use of the electronic device 200. Additionally, the storage 202 may include a high-speed random access memory, and may also include a non-volatile storage, e.g., at least one disk storage device, a flash memory device or other non-volatile solid state storage devices. In some embodiments, the storage 202 may optionally include storages disposed remotely from the processor 201, and these remote storages may be connected to the electronic device 200 via the network. Examples of the aforesaid network include but are not limited to the Internet, an intranet, a local area network (LAN), a mobile communication network or combinations thereof.

The one or more units are stored in the storage 102, and when they are executed by the one or more processors 101, a charging and discharging control method for the multi-machine parallel energy storage system of any of the embodiments of the method described above is executed.

The aforesaid electronic device 200 can execute a charging and discharging control method for the multi-machine parallel energy storage system provided in the embodiment of the present application, and has program modules and beneficial effects corresponding to the execution of the method. For technical details not fully described in the embodiment of the electronic device 200, reference may be made to a charging and discharging control method for the multi-machine parallel energy storage system provided in the embodiment of the present application.

The electronic device of the embodiment of the present application exists in various forms, including but not limited to:

(1) Ultra-mobile personal computer devices which fall into the category of personal computers, have computing and processing capabilities, and generally also have mobile Internet accessing characteristics. These terminals include: PDA, MID and UMPC devices or the like, such as iPad;

(2) servers which are devices that provide computing services, and the servers are composed of a processor, a hard disk, an internal storage, a system bus or the like. The servers are similar to the general computer architecture, but they have higher requirements in terms of processing power, stability, reliability, security, scalability, and manageability because they are required to provide highly reliable services; and

(3) other electronic devices.

It should be noted that, the embodiments of the device described above are only for illustrative purpose, wherein the units illustrated as separate components may be or may not be physically separated, and components displayed as units may be or may not be physical units. That is, these units and components may be located in one place or distributed over multiple network units. Some or all of the modules may be selected according to actual needs to achieve the objective of the solution of the embodiment.

From the description of the above embodiments, those of ordinary skill in the art may clearly appreciate that each embodiment may be realized by means of software plus a general hardware platform, and of course, it may also be realized by hardware. As shall be appreciated by those of ordinary skill in the art, the implementation of all or part of the processes in the embodiments of the method described above may be completed by instructing related hardware through a computer program, the program may be stored in a computer readable storage medium, and the program may include the processes of the embodiments of the method described above when it is executed. The storage medium may be a magnetic disk, an optical disk, a Read-Only Memory (ROM) or a Random Access Memory (RAM) or the like.

The embodiment of the present application further provides a non-volatile computer-readable storage medium, the non-volatile computer-readable storage medium may be included in the device described in the above embodiments; or it may exist independently without being assembled into the device. The above non-volatile computer-readable storage medium carries one or more programs, and the aforesaid one or more programs, when being executed, implement the method of the embodiment of the present disclosure.

Finally, it shall be noted that, the above embodiments are only used to illustrate the technical solutions of the present application, and are not intended to limit the present application. Under the idea of the present application, technical features in the above embodiments or different embodiments may also be combined, the steps may be implemented in any order, and many other variations in different aspects of the present application as described above are possible. For conciseness, these variations are not provided in details. Although the present application has been described in detail with reference to the foregoing embodiments, those of ordinary skill in the art shall appreciate that, the technical solutions described in the foregoing embodiments may still be modified or some of the technical features may be equivalently replaced; and these modifications or replacements do not make the essence of the corresponding technical solutions deviate from the scope of the technical solutions of various embodiments of the present application.

## Claims

1. A multi-machine parallel energy storage system, **characterized in that**, the multi-machine parallel energy storage system comprises: a single renewable energy device, at least two energy storage devices, an AC bus and a load, wherein the renewable energy device is configured to be connected to one of the at least two energy storage devices, and AC output terminals of the at least two energy storage devices are connected to the load through the AC bus;

   wherein when the renewable energy device is connected to any one of the at least two energy storage devices, the energy storage device connected to the renewable energy device is determined as a master device, and the energy storage device not connected to the renewable energy device is determined as a slave device;
   wherein the master device is configured to:

   dynamically acquire a first data of the master device, a second data of the slave device, and a third data of the renewable energy device;
   determine a current state of the multi-machine parallel energy storage system according to the first data, the second data and the third data;
   control the renewable energy device to provide electric energy to the master device when the current state meets the charging condition; and
   control the renewable energy device to provide electric energy to the slave device through the master device when the master device reaches a fully charged state.

2. The multi-machine parallel energy storage system according to Claim 1, **characterized in that**, the operation of determining the current state of the multi-machine parallel energy storage system according to the first data, the second data and the third data comprises:

   calculating a total load power of the multi-machine parallel energy storage system according to the first data and the second data;
   determining whether the third data is greater than the total load power, the third data comprising the power-generation power of the renewable energy device;
   when the third data is greater than the total load power, determining that the current state meets the charging condition; and
   when the third data is less than or equal to the total load power, determining that the current state does not meet the charging condition.

3. The multi-machine parallel energy storage system according to Claim 2, **characterized in that**, further comprising: after determining that the current state does not meet the charging condition, controlling the renewable energy device to provide electric energy to the load, and at the same time, the master device and the slave device are connected in parallel to discharge so as to supply power to the load.

4. The multi-machine parallel energy storage system according to Claim 1, **characterized in that**, the system adopts a dual-loop control mode of an AC output voltage outer loop and an inverter current inner loop.

5. The multi-machine parallel energy storage system according to Claim 4, **characterized in that**, the master device introduces photovoltaic power-generation power and battery discharge power into the AC output voltage outer loop of the dual-loop control mode as feedforward control, and the AC output target voltage of the master device is expressed as the following equation:

$$\text{VAC}_{Ref\_M1} = \text{VAC}_{rated} + \frac{P_{PV}}{P_{rated}} \times (1 + \Delta U)$$

$$\Delta U = -\frac{P_{discharge}}{P_{rated}} \times Ki$$

wherein $\text{VAC}_{Ref\_M1}$ is the AC output voltage target value of the master device; $\text{VAC}_{rated}$ is an AC rated output voltage of the system; $P_{PV}$ is a current power-generation power of the renewable energy device; $P_{rated}$ is a rated power of the system; $\Delta U$ is an adjustment amount of the AC output voltage, which is related to a battery pack discharge power of the master device; $P_{discharge}$ is the battery pack discharge power of the master device, $Ki$ is an output voltage adjustment coefficient corresponding to the battery pack discharge power of the master device, and $0 < Ki \leq 1$.

6.  The multi-machine parallel energy storage system according to Claim 4, **characterized in that**, the slave device adopts a constant voltage control mode in the AC output voltage outer loop of the dual-loop control mode, and the AC output target voltage of the slave device is expressed as the following equation:

$$VAC_{Ref\_M2} = VAC_{rated}$$

wherein $VAC_{Ref\_M2}$ is the AC output voltage target value of the slave device; and $VAC_{rated}$ is the AC rated output voltage of the system.

7.  The multi-machine parallel energy storage system according to any one of Claims 1 to 6, **characterized in that**, in a case where the number of the energy storage devices is at least three, the slave devices comprises at least two devices, and the master device is further configured to:
    when the master device reaches the fully charged state, determine the charging sequence of the slave devices according to a predetermined rule and control the renewable energy device to provide electric energy to the slave devices through the master device according to the charging sequence.

8.  A charging and discharging control method for a multi-machine parallel energy storage system, **characterized in that**, the charging and discharging control method is applied to the multi-machine parallel energy storage system comprising: a single renewable energy device, at least two energy storage devices, an AC bus, and a load, wherein the renewable energy device is connected to one of the at least two energy storage devices, and AC output terminals of the at least two energy storage devices are connected to the load via the AC bus;

    wherein when the renewable energy device is connected to any one of the at least two energy storage devices, the energy storage device connected to the renewable energy device is determined as a master device, and the energy storage device not connected to the renewable energy device is determined as a slave device;
    wherein the charging and discharging control method comprises:

    dynamically acquiring a first data of the master device, a second data of the slave device, and a third data of the renewable energy device;
    determining a current state of the multi-machine parallel energy storage system according to the first data, the second data and the third data;
    controlling the renewable energy device to provide electric energy to the master device when the current state meets the charging condition;
    controlling the renewable energy device to provide electric energy to the slave device through the master device when the master device reaches a fully charged state.

9.  The charging and discharging control method for the multi-machine parallel energy storage system according to Claim 8, **characterized in that**, the charging and discharging control method for the system comprises:
    enabling the system to adopt a dual-loop control mode of an output voltage outer loop and an inverter current inner loop.

10. The charging and discharging control method for the multi-machine parallel energy storage system according to Claim 9, **characterized in that**, the master device introduces photovoltaic power-generation power and battery discharge power into the AC output voltage outer loop of the dual-loop control mode as feedforward control, and the AC output target voltage of the master device is expressed as the following equation:

$$VAC_{Ref\_M1} = VAC_{rated} + \frac{P_{PV}}{P_{rated}} \times (1 + \Delta U)$$

$$\Delta U = -\frac{P_{discharge}}{P_{rated}} \times Ki$$

wherein $VAC_{Ref\_M1}$ is the AC output voltage target value of the master device; $VAC_{rated}$ is the AC rated output voltage of the system; $P_{PV}$ is the current power-generation power of the renewable energy device; $P_{rated}$ is the rated power of the system; $\Delta U$ is the adjustment amount of the output voltage, which is related to the battery pack discharge power of the master device; $P_{discharge}$ is the battery pack discharge power of the master device, $Ki$ is the output voltage adjustment coefficient corresponding to the battery pack discharge power of the master device, and $0 < Ki \leq 1$;

the slave device adopts a constant voltage control mode in the AC output voltage outer loop of the dual-loop control mode, and the AC output target voltage of the slave device is expressed as the following equation:

$$VAC_{Ref\_M2} = VAC_{rated}$$

wherein $VAC_{Ref\_M2}$ is the AC output voltage target value of the slave device; and $VAC_{rated}$ is the AC rated output voltage of the system.

100                                                                    21

Energy storage device 1

| Photovoltaic cell panel 10 | → | Master photovoltaic controller 212 | Master control unit 211 |
| | | Master battery pack 213 | Master bidirectional converter 214 |

                                                              30

Point of Common Coupling PCC

Load 40

L live wire

N neutral wire

⋮

22

Energy storage device n

| Slave photovoltaic controller 222 | Slave control unit 221 |
| Slave battery pack 223 | Slave bidirectional converter 224 |

FIG. 1

Master device is connected to the photovoltaic

$P_{PV} > P_{Load}$  — N → AC parallel discharging mode

Y

Whether the master device has reached the fully charged state? — N → Single-machine charging mode

Y

AC bus charging mode

FIG. 2

FIG. 3

FIG. 4

FIG. 5

FIG. 6

FIG. 7

## INTERNATIONAL SEARCH REPORT

| International application No. |
| --- |
| **PCT/CN2023/137873** |

**A. CLASSIFICATION OF SUBJECT MATTER**

H02J 3/32(2006.01)i; H02J 3/38(2006.01)i

According to International Patent Classification (IPC) or to both national classification and IPC

**B. FIELDS SEARCHED**

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI; IEEE; WPABS: 光伏, 新能源, 可再生, 并联储能, 主, 从, 充电, photovoltaic, solar, renew+, new energy, parallel, energy storage, host, slave, charge

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115833210 A (SHENZHEN POWEROAK NEWENER CO., LTD.) 21 March 2023 (2023-03-21)<br>see claims 1-10 | 1-10 |
| A | CN 107346896 A (BEIJING CORONA SCIENCE & TECHNOLOGY CO., LTD.) 14 November 2017 (2017-11-14)<br>see description, paragraphs 20-39, and figures 1-3 | 1-10 |
| A | CN 114552663 A (SHENZHEN SOFARSOLAR CO., LTD.) 27 May 2022 (2022-05-27)<br>see description, paragraphs 32-61, and figures 1-17 | 1-10 |
| A | CN 209184301 U (SHENZHEN POWEROAK NEWENER CO., LTD.) 30 July 2019 (2019-07-30)<br>see entire document | 1-10 |
| A | JP 2013247841 A (MITSUBISHI ELECTRIC CORP.) 09 December 2013 (2013-12-09)<br>see entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 February 2024** | **05 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 583 347 A1**

**INTERNATIONAL SEARCH REPORT**

International application No.

**PCT/CN2023/137873**

**C.    DOCUMENTS CONSIDERED TO BE RELEVANT**

| Category* | Citation of document, with indication, where appropriate, of the relevant passages | Relevant to claim No. |
|---|---|---|
| A | 米阳 等 (MI, Yang et al.). "基于多组储能动态调节的独立直流微电网协调控制 (Coordinative Control Based on Dynamic Load Allocation Among Multiple Energy Storages for Islanded DC Microgrid)" 电力自动化设备 (Electric Power Automation Equipment), Vol. 37, No. 05, 10 May 2017 (2017-05-10), pages 170-176 ISSN: 1006-6047, pages 170-175 | 1-10 |

Form PCT/ISA/210 (second sheet) (July 2022)

## INTERNATIONAL SEARCH REPORT
### Information on patent family members

International application No.

**PCT/CN2023/137873**

| Patent document cited in search report | | | Publication date (day/month/year) | Patent family member(s) | | | Publication date (day/month/year) |
|---|---|---|---|---|---|---|---|
| CN | 115833210 | A | 21 March 2023 | CN | 115833210 | B | 26 May 2023 |
| CN | 107346896 | A | 14 November 2017 | None | | | |
| CN | 114552663 | A | 27 May 2022 | CN | 114552663 | B | 09 August 2022 |
| | | | | EP | 4266527 | A2 | 25 October 2023 |
| CN | 209184301 | U | 30 July 2019 | None | | | |
| JP | 2013247841 | A | 09 December 2013 | JP | 2015202050 | A | 12 November 2015 |
| | | | | JP | 6013565 | B2 | 25 October 2016 |
| | | | | JP | 2014200170 | A | 23 October 2014 |
| | | | | JP | 5671178 | B2 | 18 February 2015 |
| | | | | JP | 2015092821 | A | 14 May 2015 |
| | | | | JP | 5774765 | B2 | 09 September 2015 |
| | | | | JP | 5781012 | B2 | 16 September 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310108608